# FASCICULE DE BREVET EUROPEEN

(11) **EP 2 647 538 B1**
(45) Date de publication et mention de la délivrance du brevet: **06.09.2017**
(21) Numéro de dépôt: 13156982.4
(22) Date de dépôt: 27.02.2013
(51) Int. Cl.: B61B 12/00, B61B 12/06

(54) **Système de détection des véhicules de service à l'approche des gares**
Erfassungssystem von Servicefahrzeugen bei der Annäherung an Bahnhöfe
System for detecting service vehicles approaching stations

(30) Priorité: 03.04.2012 FR 1253026
(43) Date de publication de la demande: 09.10.2013
(73) Titulaire: Pomagalski, 38341 Voreppe Cedex (FR)
(72) Inventeur: Fourgeaud, Laura, 74460 MARNAZ (FR); Bertolami, Olivier, 38100 GRENOBLE (FR)
(74) Mandataire: Novagraaf Technologies

(56) Documents cités:
- EP-A1- 2 067 682
- WO-A1-2008/138154
- AT-U1- 7 001
- US-A1- 2004 003 751

## Description

La présente invention concerne une installation de transport par câble comprenant un système de détection d'un véhicule.

Les installations de transport par câble, notamment les téléportés, nécessitent un certain entretien qui est réalisé grâce à des véhicules de service. Ces véhicules de service présentent souvent des plateformes supérieures et des garde-corps qui viennent en saillie de la zone d'accès des gares. En particulier quand ils servent à l'entretien des balanciers, ils sont plus hauts que le plafond de la gare. Il existe donc un risque de collision avec le plafond de la gare entraînant des dommages pour celle-ci et pour le véhicule, mais pouvant également blesser des ouvriers dans le véhicule ou dans la gare.

L'invention se propose de résoudre ce problème par un système de détection qui permet de s'assurer que le véhicule qui entre en gare a les dimensions requises ou en permettant l'arrêt du véhicule avant son entrée en gare si tel n'est pas le cas.

Le système de détection selon l'invention s'applique à un véhicule tracté par câble qui circule entre deux gares, ledit système est constitué d'une balise émettrice placée sur le véhicule et d'une antenne réceptrice placée dans chacune des gares et il est caractérisé en ce que le véhicule comprend au moins un élément escamotable en saillie, par exemple au-dessus du véhicule et que la balise n'émet que quand l'élément escamotable reste relevé. Ainsi, quand la balise émet, l'antenne réceptrice située en gare est informée d'un risque de collision d'un élément du véhicule avec la gare, pouvant ainsi communiquer l'information au système de contrôle/commande du câble. Quand la balise n'émet pas, l'antenne réceptrice est au repos et le véhicule peut entrer en gare. La balise et l'antenne réceptrice pourront utiliser la technologie RFID (Radio Frequency IDentification).

Selon une première caractéristique, l'antenne réceptrice coopère avec un système de contrôle/commande commandant le câble. De cette façon le système de contrôle/commande commandant le câble peut prendre en compte ce paramètre et adapter la circulation du véhicule sur le câble en fonction du danger éventuel.

Selon une caractéristique particulière, le système de contrôle commande l'arrêt du véhicule avant son entrée en gare lorsque l'élément escamotable est relevé. Le système de contrôle arrête le véhicule avant son entrée en gare si la balise émet, l'antenne réceptrice a un champ de réception suffisant pour permettre l'arrêt du véhicule à temps, c'est-à-dire avant son entrée en gare.

Selon une autre caractéristique, le véhicule est un véhicule de service. Ce véhicule de service peut être de tout type : passerelles mobiles, plateaux standards, etc.

Selon une autre caractéristique, l'élément escamotable est une pièce dont le gabarit ne permet pas l'entrée en gare lorsqu'elle est en saillie, comme par exemple un garde-corps.

Selon une autre caractéristique, la balise émet lorsqu'elle est activée par un contact électrique actionné par le mouvement de l'élément escamotable. C'est la position de l'élément escamotable qui ouvre ou ferme le contact.

Le contact électrique qui commande l'émission de la balise est un contact de type normalement fermé. C'est-à-dire que le contact électrique est fermé lorsqu'il est au repos et ouvert lorsqu'il est actionné. Ainsi quand l'élément escamotable est relevé le contact est fermé et la balise émet.

Selon une première variante, l'ouverture et la fermeture du contact électrique est commandé par un interrupteur mécanique actionné lorsque l'élément escamotable est abaissé. Ainsi, quand l'élément escamotable est relevé, le capteur mécanique est au repos, le contact électrique est fermé et la balise émet.

Selon une deuxième variante, le contact électrique est commandé par un capteur magnétique.

Selon une caractéristique particulière, une partie du capteur magnétique est situé sur une partie de l'élément escamotable et la deuxième partie du contact électrique est fixée au véhicule. De cette façon le mouvement de l'élément escamotable permet l'actionnement du contact, car cette première partie du capteur magnétique se trouve face à la seconde partie lorsque l'élément escamotable est abaissé, ce qui actionne électriquement le capteur en permettant le passage du courant entre les deux parties et ainsi ouvre le contact électrique de la balise. Ainsi, quand l'élément escamotable est relevé le contact est fermé et la balise émet.

L'invention concerne également un véhicule équipé du système avec les caractéristiques précédentes.

D'autres avantages apparaîtront mieux à la lecture de la description détaillée qui suit, donnée à titre indicatif et nullement limitatif, et en référence aux dessins annexés présentés ci-après
- La figure 1 représente une vue schématique d'un téléporté équipé du système selon l'invention,
- la figure 2 est un schéma de principe du système,
- la figure 3 est une vue d'un véhicule de service équipé du système,
- la figure 4 est une vue de l'articulation du garde-corps du véhicule de la figure 3,
- la figure 5 est une vue détaillée de la partie entourée de la figure 4.

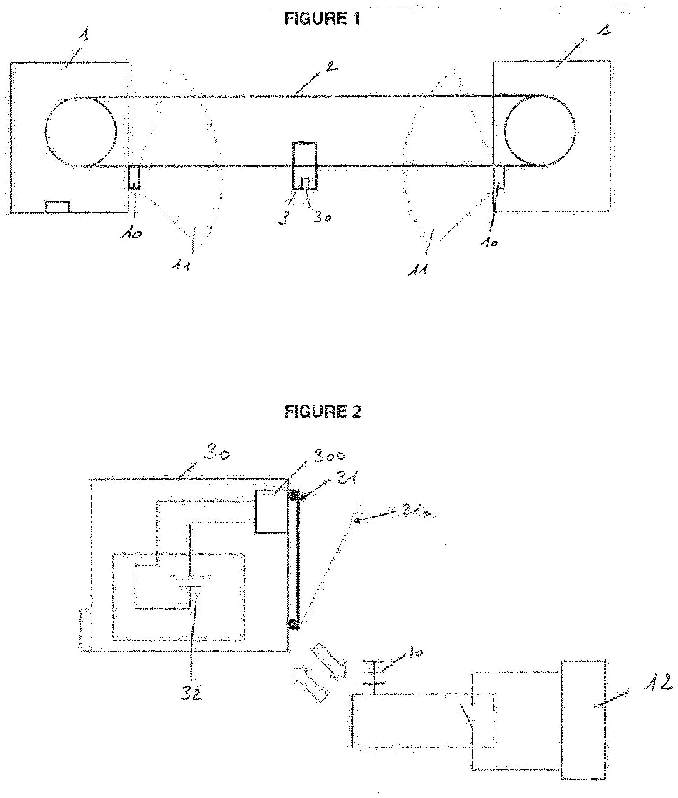

Dans le cas d'un téléporté équipé d'un système selon l'invention, on peut voir sur la figure 1 deux gares 1 entre lesquelles est tendu un câble de traction 2. Le câble 2 permet la circulation d'un véhicule 3 équipé d'un capteur 30 comprenant une balise 300 apte à coopérer avec une antenne réceptrice 10, ou lecteur, placée dans une gare 1. Chaque gare 1 est équipée d'une antenne réceptrice 10. L'antenne réceptrice 10 a une zone de détection 11 au-delà de laquelle elle ne capte rien et qui correspond au champ couvert par l'antenne 10.

Lorsque que le véhicule 3 s'approche d'une gare 1, si la balise 300 émet dès qu'elle entre dans la zone de détection 11 de l'antenne réceptrice 10 de ladite gare 1 le véhicule 3 est stoppé. Si la balise 300 n'émet pas le véhicule 3 peut entrer en gare.

La figure 2 illustre le mode de fonctionnement de la balise 300. La balise 300 est reliée de façon classique à une batterie 32. La balise 300 émet quand elle est alimentée en courant par la batterie 32, cette alimentation se fait par un contact électrique 31 tel qu'un interrupteur et quand ledit contact électrique 31 est fermé. Quand il est ouvert, c'est à dire dans la position 31a, la balise 300 n'émet pas.

Quand la balise 300 émet et que le véhicule s'approche d'une gare 1, l'antenne réceptrice 10 reçoit le signal lorsque la balise 300 entre dans la zone de détection 11 de l'antenne réceptrice 10 qui informe un automate ou système de contrôle 12 qui arrête le câble 2 et le véhicule 3 avant son entrée en gare.

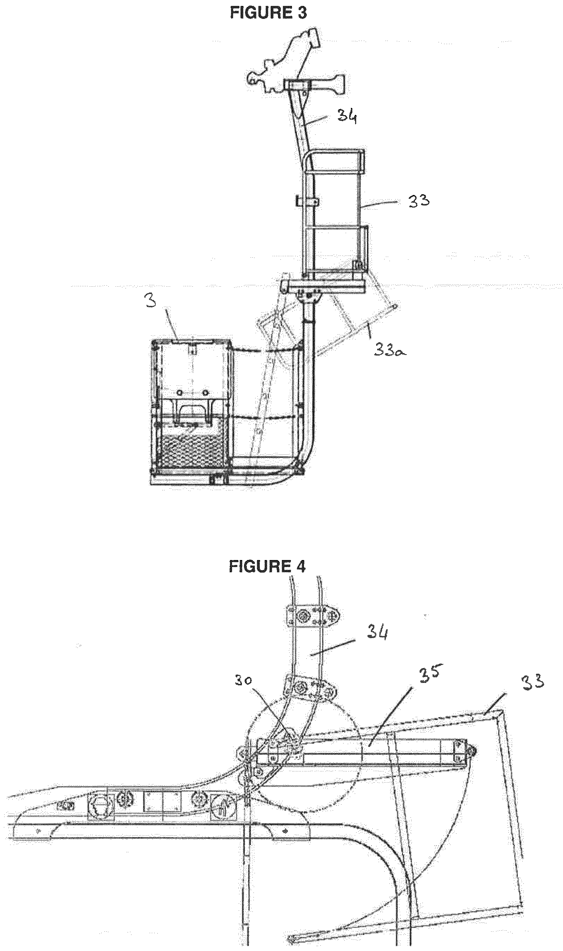

Le véhicule 3 illustré à la figure 3 comporte un élément escamotable 33, comme par exemple un garde-corps, Lorsque ledit élément escamotable 33 est escamoté (position 33a) la balise 300 n'émet pas. Quand ledit élément escamotable 33 est sorti ou relevé (position 33) la balise 300 émet.

Dans l'exemple illustré à la figure 3 l'élément escamotable 33 est disposé sur une suspente 34 qui porte le véhicule 3 sur le câble 2.

La figure 4 montre un exemple de positionnement de la balise 300, dans l'exemple illustré le capteur 30 est située entre l'élément escamotable 33 (le garde-corps) et un caillebotis 35.

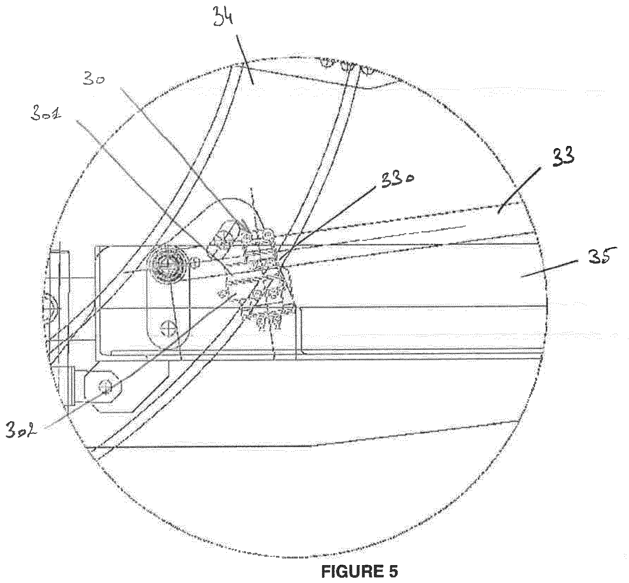

Le détail de la balise 300 est illustré à la figure 5. On voit que le capteur 30 est également constitué d'un aimant 301 et d'un contact magnétique 302 relié à la balise 300. L'aimant 301 est fixé sur une partie 330 de l'élément escamotable 33 tandis que le contact magnétique 302 est solidaire du caillebotis 35.

Lorsque que le garde-corps ou l'élément escamotable 33 est rabattu ou escamoté l'aimant 301 est en face du contact magnétique 302. Dans cet exemple le contact électrique est normalement fermé, c'est-à-dire que le courant est coupé quand le contact est fermé.

## Revendications

1. Installation de transport par câble comprenant un système de détection d'un véhicule (3) tracté par câble (2), ledit véhicule (3) circulant entre deux gares (1), ledit système est constitué d'une balise (30) placée sur le véhicule (3) et d'un antenne réceptrice (10) placée dans chacune des gares (1) **caractérisée en ce que** le véhicule (3) comprend au moins un élément escamotable (33) en saillie du véhicule (3) et que la balise (30) n'émet que quand l'élément escamotable (33) reste en saillie du véhicule (3).

2. Installation selon la revendication 1 **caractérisée en ce que** l'antenne réceptrice (10) coopère avec un système de contrôle/commande (12) commandant le câble (2).

3. Installation selon la revendication précédente **caractérisée en ce que** ledit système de contrôle (12) commande l'arrêt du véhicule (3) avant son entrée en gare (1) lorsque l'élément escamotable (33) est relevé.

4. Installation selon une des revendications précédente **caractérisée en ce que** le véhicule (3) est un véhicule de service.

5. Installation selon une des revendications précédentes **caractérisée en ce que** l'élément escamotable (33) est une pièce dont le gabarit ne permet pas l'entrée en gare lorsqu'elle est en saillie.

6. Installation selon une des revendications précédentes **caractérisée en ce que** la balise (30) émet lorsqu'elle est activée par un contact électrique (31) actionné par le mouvement de l'élément escamotable (33).

7. Installation selon la revendication précédente **caractérisée en ce que** le contact électrique (31) est un contact normalement fermé.

8. Installation selon une des revendications 6 à 7 **caractérisée en ce qu'une** partie de l'actionneur du contact électrique (31) est situé sur une partie de l'élément escamotable (33) et la deuxième partie de l'actionneur du contact électrique (31) est fixée au véhicule (3).

## Patentansprüche

1. Seilbahnanlage, umfassend ein System zum Erfassen eines per Seil (2) gezogenen Fahrzeugs (3), wobei das Fahrzeug (3) zwischen zwei Stationen (1) verkehrt, wobei das System aus einer Bake (30), die auf dem Fahrzeug (3) angebracht ist, und einer Empfangsantenne (10) besteht, die in jeder der Stationen (1) angebracht ist, **dadurch gekennzeichnet, dass** das Fahrzeug (3) wenigstens ein einziehbares, vom Fahrzeug (3) vorstehendes Element (33) umfasst, und dass die Bake (30) nur dann sendet, wenn das einziehbare Element (33) vom Fahrzeug (3) vorstehend bleibt.

2. Anlage nach Anspruch 1, **dadurch gekennzeichnet, dass** die Empfangsantenne (10) mit einem Kontroll-/Steuersystem (12) zusammenwirkt, das das Seil (2) steuert.

3. Anlage nach dem vorhergehenden Anspruch, **dadurch gekennzeichnet, dass** das Kontrollsystem (12) den Stopp des Fahrzeugs (3) vor seiner Einfahrt in die Station (1) steuert, wenn das einziehbare Element (33) ausgefahren ist.

4. Anlage nach einem der vorhergehenden Ansprüche, **dadurch gekennzeichnet, dass** das Fahrzeug (3) ein Servicefahrzeug ist.

5. Anlage nach einem der vorhergehenden Ansprüche, **dadurch gekennzeichnet, dass** das einziehbare Element (33) ein Bauteil ist, dessen Größe die Einfahrt in die Station nicht gestattet, wenn es vorsteht.

6. Anlage nach einem der vorhergehenden Ansprüche, **dadurch gekennzeichnet, dass** die Bake (30) sendet, wenn sie durch einen elektrischen Kontakt (31), der durch die Bewegung des einziehbaren Elements (33) ausgelöst wird, aktiviert wird.

7. Anlage nach dem vorhergehenden Anspruch, **dadurch gekennzeichnet, dass** der elektrische Kontakt (31) ein normalerweise geschlossener Kontakt ist.

8. Anlage nach einem der Ansprüche 6 bis 7, **dadurch gekennzeichnet, dass** sich ein Teil des Auslösers des elektrischen Kontakts (31) auf einem Teil des einziehbaren Elements (33) befindet und der zweite Teil des Auslösers des elektrischen Kontakts (31) am Fahrzeug (3) befestigt ist.

## Claims

1. Cable transport installation comprising a detection system for a vehicle (3) pulled by a cable (2), said vehicle (3) circulating between two stations (1), said system is composed of a beacon (30) placed on the vehicle (3) and a receiving antenna (10) placed in each station (1), **characterised in that** the vehicle (3) comprises at least one retractable element (33) projecting from the vehicle (3) and that the beacon (30) only emits when the retractable element (33) is projecting from the vehicle (3).

2. Installation according to claim 1, **characterised in that** the receiving antenna (10) cooperates with an instrumentation/control system (12) controlling the cable (2)

3. Installation according to the previous claim, **characterised in that** said control system (12) stops the vehicle (3) before it enters the station (1) when the retractable element (33) is raised.

4. Installation according to one of the previous claims, **characterised in that** the vehicle (3) is a service vehicle.

5. Installation according to one of the previous claims, **characterised in that** the retractable element (33) is a part that is sufficiently large to not be able to entry into the station when it is projecting from the vehicle.

6. Installation according to one of the previous claims, **characterised in that** the beacon (30) emits when it is activated by an electrical contact (31) activated by movement of the retractable element (33).

7. Installation according to the previous claim, **characterised in that** the electrical contact (31) is a normally closed contact.

8. Installation according to either claim 6 or claim 7, **characterised in that** part of the actuator of the electrical contact (31) is located on part of the retractable element (33) and that the second part of the actuator of the electrical contact (31) is fixed to the vehicle (3).
